# EUROPEAN PATENT APPLICATION

(11) **EP 0 685 353 A1**
(43) Date of publication of application: **06.12.1995**
(21) Application number: 95303723.1
(22) Date of filing: 31.05.1995
(51) Int. Cl.: B60C 11/03, B60C 19/00

(54) **Twin tyre pair**

(30) Priority: 01.06.1994 DE 4419295
(71) Applicant: SP REIFENWERKE GMBH, 63450 Hanau (DE)
(72) Inventor: Jancke, Edgar, D-63584 Grundau (DE); Ott, Ernst, D-63457 Hanau (DE)
(74) Representative: Stewart, Charles Geoffrey

(57) **Abstract**

A twin tyre pair for powered vehicles, in particular container handling vehicles and quarry vehicles, wherein each individual tyre (1,2) of the tyre pair is constructed from an underbody having a carcass and a protector which covers over the remaining parts of the tyre towards the outside and which has a tread (4,5), wherein, in order to reduce the load on the underlying ground, the tread (4,5) of the two individual tyres (1,2) of the tyre pair each have a profile or pattern (10,11) the effective thickness of which, i.e. their groove-to-block ratio transverse to the peripheral direction of the tyre, reduces from the edge of the tread (4,5) adjacent to the respective other individual tyre (1 and 2 respectively) towards the edge remote therefrom.

## Description

The invention relates to a twin tyre pair for powered vehicles, in particular container handling vehicles and quarry vehicles, wherein each individual tyre of the tyre pair is constructed from an underbody having a carcass and a protector which covers over the remaining parts of the tyre towards the outside and which has a tread. The individual tyres can have either a cross-ply or radial construction.

Twin tyre pairs are used in particular for powered vehicles employed for transporting or moving heavy loads. Tyres of this kind thus have high load requirements. For vehicles used for moving heavy loads, such as container handling vehicles and vehicles used in quarries, there is, in addition to the problem of the absolute size of the load, the problem that the loaded vehicles need to move about confined spaces and therefore have to drive around very tight bends with small radii of curvature and even need to be able to turn on the spot. This causes a particularly large tread load on the vehicle tyres which, for twin tyre pairs, leads to the tread becoming worn by friction in a peaked or roof-like manner. That is to say, the special kind of loading occurring in vehicles of this kind leads to the tread of the individual tyres of a twin tyre pair each being worn more heavily on the side of the tyre lying remote from the other tyre of the pair than on the side of the tyre adjacent the other tyre of the pair.

As well as the rapid wear of twin tyre pairs due to friction in the manner described above, there is the additional disadvantage that, with increasing tyre wear, the normal contact surface of the tyre with the ground becomes ever smaller and thereby the load on the underlying ground from the tyre increasingly approaches a point load. In particular, this leads to heavy damage of the roadways used by the container handling vehicles. For example, the twin tyre pairs, enhanced by the tyre profile, dig out stones from the underlying ground and thus damages it. On the other hand, as a rule, it is not possible to do without a pattern or a profiling of the tread of the twin tyre pairs since this is required for adequate traction of the vehicle.

The object of the invention is therefore to provide a twin tyre pair of the initially named kind in which these disadvantages are avoided.

This object is satisfied in accordance with the invention in that the treads of the two individual tyres of the tyre pair each have a profile, the effective thickness of which, i.e. their groove-to-block ratio transverse to the peripheral direction of the tyre, reduces from the edge of the tread adjacent to the respective other tyre towards the edge remote therefrom.

This design of the tread profile or pattern counteracts the formation of roof-like tyre wear of the individual tyres of the twin tyre pair. The wear of the tyre tread of each of the two individual tyres of a twin tyre pair is evened out due to the provision of a lesser profile in the region of heavier load. Consequently, a large contact surface of the tyre is retained so that the load is distributed over a larger surface on the underlying ground so that the danger of damaging the underlying ground is reduced.

The reduction of the thickness of the profile transverse to the peripheral direction of the tyre can either take place continuously or stepwise. In particular, in accordance with an embodiment of the invention, the tread of each individual tyre of a tyre pair can have a region adjacent to the respective other tyre in which the profile is effectively thicker than in the remaining region. Therefore, in this case, only a single step is present. This design is particularly advantageous when a very low load occurs in a particular region of the tread whereas in the remaining region a particularly high load is present.

In this case, in accordance with a further embodiment of the invention, there can be provided absolutely no pattern or profile in a region of the tread of each individual tyre of a tyre pair remote from the respective other individual tyre. This region of the tyre is particularly resistant against wear so that, despite strong sideways load, uniform wear is achieved. The tread regions of the two individual tyres of a tyre pair which are adjacent to one another provide in this case the main contribution to the traction of the vehicle as a result of their profile. In this embodiment, it is also possible to reduce the effective thickness of the profile either continuously or stepwise transverse to the peripheral direction of the tyre with increasing distance from the respective other tyre. In particular, the profile can merge continuously into the profile-free region.

The profile-free region may preferably comprise approximately 40 to 60%, in particular approximately 50% of the total width of the tread. This design provides a good resistance against wear in the heavily loaded region and simultaneously good traction.

In accordance with an embodiment of the invention, grooves are present as the profile which extend transverse to the peripheral direction of the tyre and these may be either wedge-shaped or tapered downwards to give a wedge shape, wherein the tips of the grooves point away from the respective other individual tyre. This profile design has proved to be particularly suitable for twin tyres which need to transmit a large amount of traction.

The wedge-shaped or wedge-shape tapering grooves may extend in a straight line transverse to the peripheral direction of the tyre. Twin tyres of this kind are particularly suitable for vehicles used in quarries. The tips of the wedge-shaped or tapering wedge-shaped grooves can, in accordance with a further embodiment of the invention, have an arch-shaped form, with the arch either following the running direction or being against the running direction. This embodiment is particularly advantageous for container handling vehicles, since this profile design distributes the load uniformly over the contact surface. In both designs, the depths of the grooves can each be reduced towards the tip of the wedge. This further improves the uniformity of tyre wear transverse to the peripheral direction of the tyre.

Twin tyre pairs in accordance with the invention are advantageously used for container handling vehicles and quarry vehicles, wherein, in particular on the drive axle, two twin tyre pairs are present, whereas the steering axle can be provided with conventional individual tyres. In general, the invention provides different profiles suitable for different conditions depending on the aggressiveness or sensitivity of the ground and provide high running performance.

The invention is described in the following by means of example only with reference to the Figures which show:
Figure 1 a plan view onto a twin tyre pair of the invention;
Figure 2 a section of the tread of an individual tyre of Figure 1;
Figure 3 an individual tyre of a variant of a twin tyre pair of the invention in a perspective illustration;
Figure 4 a plan view onto a further variant of a twin tyre pair of the invention; and
Figure 5 a partial section through a known twin tyre pair.

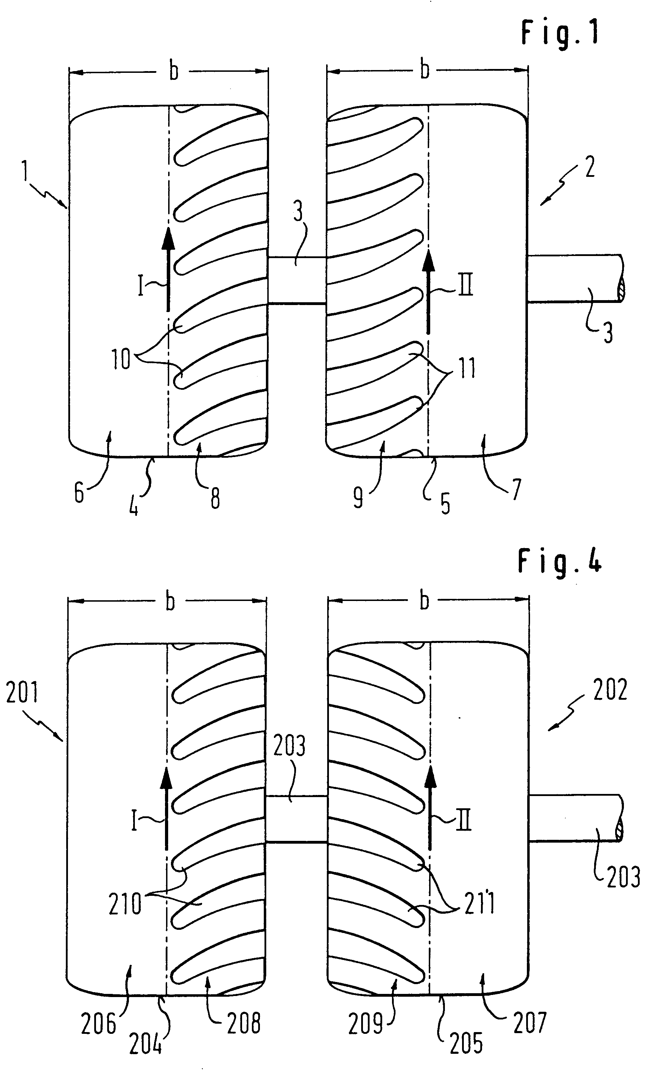

The twin tyre pair illustrated in Figure 1 is comprised of two individual tyre 1 and 2 which are rotatably mounted on a common axle 3. The individual tyres 1 and 2 are the same as one another, but arranged in opposite orientation on the axle 3.

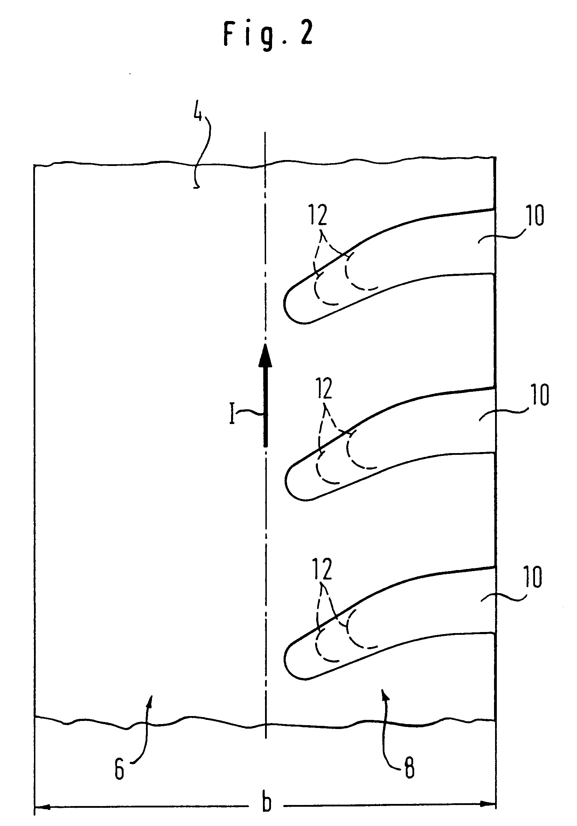

Each individual tyre 1 and 2 has a profile-free region 6 and 7 respectively on its tread 4 and 5 respectively as well as a profiled region 8 and 9 respectively. In the example illustrated, the profile-free regions 6 and 7 constitute approximately half of the total width b of the tread. The two individual tyres 1 and 2 are each provided with grooves 10 and 11 respectively in their profiled regions 8 and 9 respectively. In the one case, the grooves are arched against the running direction and in the other case in the running direction, the running direction of the individual tyres 1 and 2 being shown with the arrow I and II respectively. The depth of the grooves 10 and 11 reduces in each case from their end adjacent to the corresponding other tyre towards the centre of the relevant tread in the way indicated in Figure 2 with the dashed height lines 12.

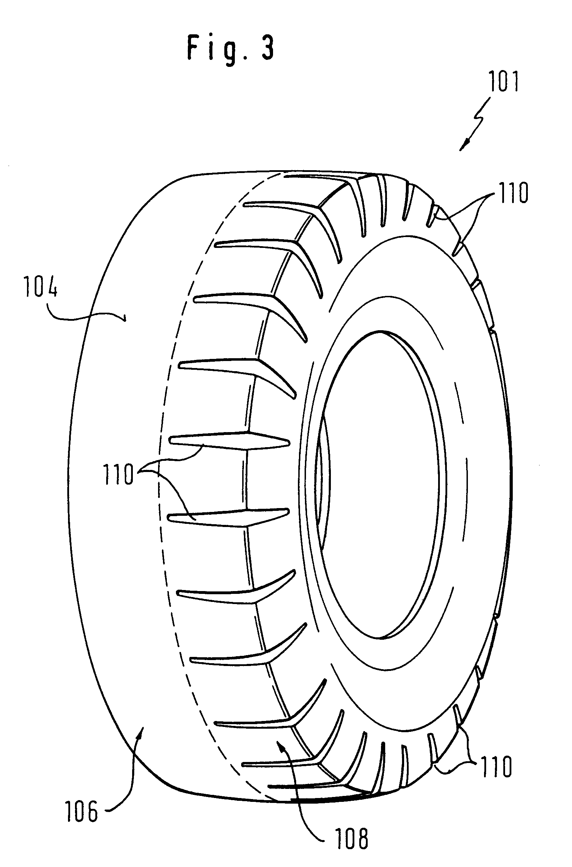

The individual tyre 101 of a variant of the twin tyre of the invention shown in Figure 3 is provided in its profiled region 108 with wedge-shaped grooves 100 extending in a straight line transverse to the peripheral direction of the tyre. The wedge tips of these grooves are each aligned towards the centre of the tread. The second individual tyre of the twin tyre pair (not shown) has, also in this variant, the same form as the first individual tyre illustrated and is mounted with its profiled region adjacent to the profiled region 108 of the illustrated individual tyre 101, i.e. in the opposite orientation.

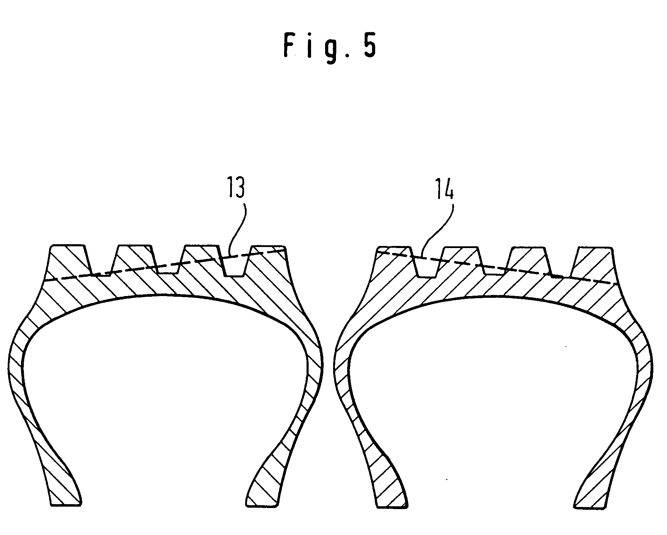

In the variant shown in Figure 4, the two individual tyres 201 and 202 are formed as mirror images of one another, with grooves 210 and 211 respectively which are each arched against the running direction indicated with I and II respectively. This direction-oriented variant is characterised by its high traction with simultaneously uniformly distributed load over its contact surface.

The profile design of Figure 1 also provides a particularly uniform distribution of the load over the contact surface, whereas the design of Figure 3 allows a larger traction to be transmitted. The variants of Figures 1 and 4 are therefore particularly suited for container handling vehicles, whereas the variant of Figure 3 can preferably be used for vehicles employed in quarries.

Other profile designs than those illustrated are naturally also possible. The wedge tips can, as illustrated in Figures 1, 2 and 4, be rounded off. The form of the profile depends in particular in each case on the requirements specific to the intended application of the twin tyre pair.

For container handling vehicle applications or quarry vehicle applications, the individual tyres 1, 2, 101, 201, 202 can, for example, have a diameter of approximately 1600 to 1665mm and a tread width b of approximately 400 to 440mm. Straight-lined or arched grooves 10, 11, 110 can be provided over the periphery and distributed, for example, approximately 32. The variant of Figure 3 relates to the standard version with a profile depth of approximately 30mm whereas the variants of Figures 1 to 4 represent deep version with an enlarged profile depth of for example approximately 50mm corresponding to the standard version plus 60% profile depth, wherein the profile grooves are stepped towards the centre of the tyre as shown in Figure 2 with the reference numeral 12.

The twin tyre 1, 2, 101, 201, 202 of the invention provides a uniform wear of the tread 4, 5, 104, 204, 205 so that the formation of a roof-like tyre shape providing in normal straight line use a small contact surface is prevented and instead a large contact surface is always retained. The roof-like shape which occurs in known twin tyre pairs as a result of non-uniform wear is indicated in Figure 5 with the dashed lines 13 and 14. This shape with its reduced contact surface leads not only to a heavy load on the ground, but also to rapid further wear of the tyre. Furthermore, retreading the individual tyres is made difficult.

In contrast, the profile design of Figures 1 to 4 provides uniform wear of the twin tyres 1, 2, 101, 201, 202 and thus a large contact surface. The load on the ground is considerably reduced with twin tyres 1, 2, 101, 201, 202 of the invention in comparison to known twin tyres.

## Claims

1. A twin tyre pair for powered vehicles, in particular container handling vehicles and quarry vehicles, wherein each individual tyre (1,2;101;201,202) of the tyre pair is constructed from an underbody having a carcass and a protector which covers the remaining parts of the tyre towards the outside and which has a tread (4,5;104;204,205), characterised in that the treads (4,5;104,204,205) of the two individual tyres (1,2;101;201,202) of the tyre pair each have a profile (10,11;110;210,211) the effective thickness of which, i.e. their groove-to-block ratio transverse to the peripheral direction of the tyre (I,II), reduces from the edge of the tread (4,5;104;204,250) adjacent to the respective other individual tyre towards the edge remote therefrom.

2. A twin tyre pair in accordance with claim 1, characterised in that the reduction of the effective thickness of the profile (10,11;11;210,211) takes place continuously.

3. A twin tyre pair in accordance with claim 1, characterised in that the reduction of the effective thickness of the profile (10,11;110;210,211) takes place stepwise.

4. A twin tyre pair in accordance with claim 3, characterised in that the tread (4,5;104;204,205) of each individual tyre (1,2;101;201,202) of a tyre pair has a region (8,9;108;208,209) adjacent to the respective other tyre in which the profile (10,11;110j210,211) is effectively thicker than in the remaining region (6,7;106;206,207).

5. A twin tyre pair in accordance with any one of claims 1 to 4, characterised in that in a region (6,7;106;2-6,207) of the tread (4,5;1-4;204,205) of each individual tyre (1,2;101;201,202) of a tyre pair remote from the respective other individual tyre (1,2;101;201,202) there is absolutely no profile present.

6. A twin tyre pair in accordance with claim 5, characterised in that the region (6,7;106;206,207) without profile comprises approximately 40-60%, in particular circa 50% of the total width (b) of the tread.

7. A twin tyre pair in accordance with any one of the preceding claims, characterised in that grooves (10,11;110;210,211) are present as the profile which extend transverse to the peripheral direction of the tyre and which are either wedge-shaped or taper down in a wedge-shape, wherein the tips of the grooves point away from the respective other individual tyre (1,2;101;201,202).

8. A twin tyre pair in accordance with claim 7, characterised in that the depth of the wedge-shaped grooves or the grooves which taper down in the shape of a wedge (10,11;210,211) respectively reduces towards the tip of the grooves.

9. A twin tyre pair in accordance with claim 7 or 8, characterised in that the tip of the wedge-shaped grooves or the grooves which taper down in the shape of a wedge (10,11) is, in an individual tyre (1), arched against the running direction (I) of the individual tyre (1) and in the other individual tyre (2) arched with the running direction (II).

10. A twin tyre pair in accordance with claim 7 or 8, characterised in that the tip of the wedge-shaped grooves or the grooves which taper down in the shape of a wedge (210,211) is, in both individual tyres (201,202) arched against the running direction (I,II) of the individual tyres (201,202).

11. A container handling vehicle or quarry vehicle having at least two twin tyre pairs in accordance with any one of the preceding claims.
